# EUROPÄISCHE PATENTSCHRIFT

(11) **EP 0 286 973 B1**
(45) Veröffentlichungstag und Bekanntmachung des Hinweises auf die Patenterteilung: **01.12.1993**
(21) Anmeldenummer: 88105509.9
(22) Anmeldetag: 07.04.1988
(51) Int. Cl.: B29C 45/14, B29C 67/18, F16L 13/00

(54) **Verfahren zur Herstellung von Formschlauchverzweigungen aus Gummi und nach diesem Verfahren hergestellter Schlauch**
Method of manufacturing rubber pipe junction and article manufactured thereby
Procédé de fabrication de raccords ramifiés pour tuyaux flexibles en caoutchouc et produit obtenu par ce procédé

(30) Priorität: 16.04.1987 DE 3713064
(43) Veröffentlichungstag der Anmeldung: 19.10.1988
(73) Patentinhaber: METZELER Automotive Profiles GmbH, D-88131 Lindau (DE)
(72) Erfinder: Härtel, Volker, Dr., D-8034 Germering (DE); Heynemann, Carl, D-8028 Taufkirchen (DE); Kahlefeld, Hermann, D-6944 Hemsbach (DE)
(74) Vertreter: Preissner, Nicolaus, Dipl.-Ing.

(56) Entgegenhaltungen:
- EP-A- 0 280 547
- DE-A- 3 239 623
- DE-A- 3 336 940
- FR-A- 2 411 686
- FR-A- 2 596 133
- GB-A- 511 989
- GB-A- 2 157 386
- US-A- 4 648 628

## Beschreibung

Die Erfindung bezieht sich auf ein Verfahren zur Herstellung von Formschlauchverzweigungen aus Gummi für Kraftfahrzeug-Kühlwasserschläuche, bei dem auf die freien Enden eines Verzweigungsrohrstückes aus Kunststoff ausvulkanisierte Schlauchabschnitte aus EPDM-Gummi aufgeschoben und befestigt und die aufgeschobenen Schlauchenden und die dazwischen liegenden freien Bereiche mit einer Muffe aus einer thermoplastischen, olefinischen Masse umspritzt werden.

Ein derartiges Verfahren ist aus der FR-A-2 411 686 bekannt. Dabei wird als Material für die Schlauchabschnitte ein EPDM-Kautschuk und für das umspritzte thermoplastische Material ein polyolefinisches Material verwendet.

Hiermit ist es möglich, ebenfalls eine gute Verbindung zwischen den aufgeschobenen Schlauchabschnitten und der Muffe zu erreichen, die jedoch höchsten Ansprüchen bezüglich Schwellfestigkeit und Temperaturbeständigkeit nicht in allen Bereichen genügt.

Der vorliegenden Erfindung liegt demgegenüber die Aufgabe zugrunde, eine Formschlauchverzweigung zu schaffen, bei der insbesondere Schwellkräfte sicher abgefangen werden, so daß damit ein Aufweiten der Schläuche im Bereich der Verbindungsstelle und ein allmähliches Ablösen vom Verzweigungsrohrstück sicher vermieden werden.

Zur Lösung dieser Aufgabe ist erfindungsgemäß vorgesehen, daß für das Verzweigungsrohrstück und die zu umspritzende Masse ein gleiches, zu einem Basispolymer des Schlauchgummis affines, thermoplastisches Material mit einem um mindestens eine Größenordnung höheren E-Modul als dem des Gummis verwendet wird derart, daß sich auch die Schmelze des Thermoplastes mit dem Polymer des Gummis verbindet und eine Verschweißung der entstehenden Muffe mit den Gummischläuchen und den freiliegenden Bereichen des Verzweigungsrohrstückes einerseits sowie des Verzweigungsrohrstückes mit den aufgeschobenen Schlauchenden andererseits erfolgt.

Durch die angegebene Materialwahl wird erreicht, daß bei einer Erwärmung durch das flüssige thermoplastische Material der Muffe und der Affinität sowohl des Muffenmaterials als auch des Materiales des Rohrverzweigungsstückes zu einem Polymer des Gummis auch die innerhalb der aufgeschobenen Schlauchabschnitte liegenden Enden des Verzweigungsrohrstückes mit dem Gummi verschweißen, so daß sich eine absolut dichte Verbindung sowohl auf der Innenseite als auch auf der Außenseite der aufgeschobenen Schlauchabschnitte ergibt. Damit wird erreicht, daß eine Aufweitung zwischen den Schlauchabschnitten und dem Verzweigungsrohrstück sicher nicht auftreten kann.

Dabei können als polyolefinische Masse Polyethylen oder Propylen verwendet werden.

Bei einem weiteren Verfahren zur Herstellung derartiger Formschlauchverzweigungen ist erfindungsgemäß vorgesehen, daß für das Verzweigungsrohrstück und die zu umspritzende Muffe ein gleiches, zu einem Basispolymer des Schlauchgummis affines, vernetzbares Material mit einem mindestens um eine Größenordnung höheren E-Modul als dem des Gummis verwendet wird derart, daß sich die umspritzte Masse bei der Vernetzung mit dem Polymer des Gummis verbindet und eine Verschweißung der entstehenden Muffe mit den Gummischläuchen und den freiliegenden Bereichen des Verzweigungsrohrstückes einerseits sowie des Verzweigungsrohrstückes mit den aufgeschobenen Schlauchenden andererseits erfolgt.

Hierbei wird sowohl für das Verzweigungsrohrstück als auch für die Masse der Muffe ein vernetzbares Material verwendet, d. h. ein solches, das sich unmittelbar mit dem Gummimaterial vernetzen kann und damit eine besonders feste und auch bei erhöhten Temperaturen nicht wieder auflösbare Verbindung ergibt.

Als vernetzbare Masse kann dabei insbesondere Polyethylen mit Peroxid verwendet werden.

An die Schlauchabschnitte können zur Verbesserung des Formschlusses vor dem Aufschieben Schlauchendstücke in der Form der freien Enden des Verzweigungsrohrstückes aufvulkanisiert werden.

Der E-Modul der Muffe beträgt zweckmäßigerweise etwa 500 bis 3000 N/mm².

Dabei können die freien Rohrenden des Verzweigungsrohrstückes auf ihrer Außenseite eine umlaufende, im Querschnitt etwa sägezahnförmige Rippe mit zum Rohrende sanft abfallender Flanke zur formschlüssigen Halterung der übergeschobenen Schlauchenden aufweisen.

Ferner kann das Verzweigungsrohrstück im Bereich der innenliegenden Enden der Rohrstücke auf ihrer Außenseite radial abragende, stiftförmige Anschläge für die Schlauchenden aufweisen.

Desweiteren können die Schlauchabschnitte ausvulkanisierte Endstücke mit einer Innenkontur entsprechend der sägezahnförmigen Rippen aufweisen.

Anhand einer schematischen Zeichnung sind Aufbau und Wirkungsweise eines Ausführungsbeispiels nach der Erfindung näher erläutert. Dabei zeigen
- Fig. 1: einen Querschnitt durch ein beispielsweise T-förmiges Verzweigungsrohrstück mit aufgeschobenen Schlauchabschnitten im vormontierten Zustand,
- Fig. 2: einen Querschnitt durch eine fertige Schlauchverzweigung mit aufgespritzter Muffe und
- Fig. 3: einen Querschnitt durch ein Schlauchende mit gesondert anvulkanisiertem Endstück.

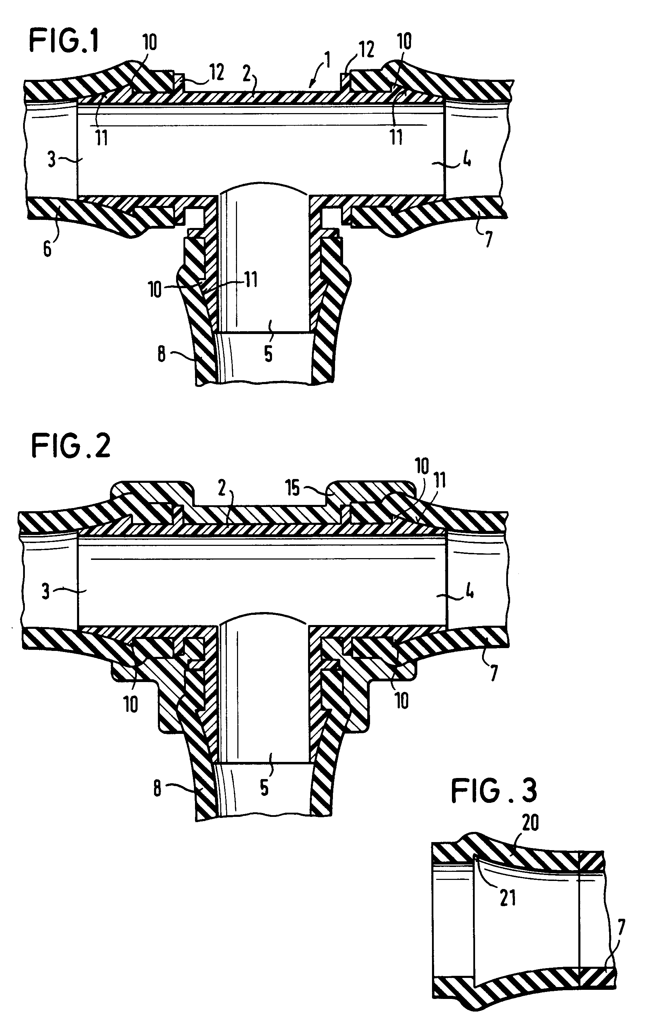

In Fig. 1 und 2 ist als einfaches Beispiel ein Schlauch für eine Verzweigung mit einem einzigen Abzweig, d. h. eine T-förmige Schlauchverzweigung, gezeigt, da hieran das erfinderische Prinzip am einfachsten erläutert werden kann. Wie dabei aus Fig. 1 zu ersehen ist, wird die T-förmige Verzweigung 1 primär durch ein T-förmiges Verzweigungsrohrstück 2 mit den freien Rohrstutzen 3, 4 und 5 gebildet, wobei der Rohrstutzen 5, der den eigentlichen Abzweig bildet, im Winkel von 90° angesetzt ist. Er kann aber auch in jedem beliebigen anderen Winkel entsprechend der geforderten Ausgestaltung des Abzweigs an das Hauptrohr angesetzt werden. Darüber hinaus ist es in gleicher Weise möglich, nicht nur einen Abzweig, sondern mehrere in verschiedenen Raumwinkeln zueinander anzuordnen. Dieses Verzweigungsrohrstück 2 soll nunmehr mit den die fertige Verzweigung 1 bildenden, einzelnen vorliegenden Schlauchabschnitten 6, 7, und 8 fest verbunden werden.

Für eine mechanische, formschlüssige Verbindung weisen die freien Rohrenden 3, 4 und 5 des Verzweigungsrohrstückes 2 auf ihrer Außenseite eine umlaufende, im Querschnitt etwa sägezahnförmige Rippe 10 mit zum Rohrende sanft abfallender Flanke 11 auf. Über diese Rippen 10 können nunmehr die Schlauchstücke 6, 7 und 8 leicht aufgeschoben werden, während einem Zurückziehen durch die sägezahnförmige Ausbildung der Ripp ein erheblicher Widerstand entgegengesetzt wird.

Um die Schlauchabschnitte 6, 7 und 8 auch radial auf dem T-Stück genau zu positionieren, kann das Rohrverzweigungsstück 2 auf seiner Außenseite noch mit radial abragenden stiftförmigen Anschlägen 12 versehen sein, die das Aufschieben der Schlauchabschnitte 6, 7 und 8 entsprechend begrenzen.

Diese so vorkonfektionierte Schlauchverzweigung wird nunmehr in eine nicht näher dargestellte Form eingelegt und entsprechend Fig. 2 mit einem die Schlauchenden 6, 7 und 8 und die freiliegenden Bereiche des Rohrverzweigungsstückes 2 überdeckenden Muffe bildenden Material umspritzt, das anschließend erkaltet bzw. vernetzt.

Als Material für diese Muffe ist dabei eine thermoplastische oder vernetzbare Masse mit einem sehr viel höheren, d.h. um mindestens eine Größenordnung größeren E-Modul als dem des Gummis zu verwenden. Als thermoplastische Masse eignet sich besonders ein Polyolefin, wie beispielsweise Polyethylen oder Polypropylen. Als vernetzbare Masse kann ein Polyethylen mit Peroxid verwendet werden.

Wesentlichl dabei ist, daß diese aushärtbare oder vernetzbare Masse affin bzw. chemisch identisch zu einem Basispolymer des Gummis ist, wobei als Gummi für die Schlauchabschnitte vorzugsweise EPDM verwendet wird. Ein derartiges EPDM weist nämlich neben den vernetzten Abschnitten ausreichend lange kettenförmige Segmente auf, die aufschmelzbar sind, so daß bei entsprechender Temperatur des Muffenmaterials eine Verschweißung der Muffe 15 mit den Schlauchabschnitten 6, 7 und 8 erfolgt und damit eine flüssigkeitsdichte, feste und durch mechanische Beanspruchungen unauflösbare Verbindung zwischen Muffe 15 und Schlauchabschnitten 6, 7 und 8 gewährleistet ist.

Wenn darüber hinaus das Rophrverzweigungsstück 2 aus dem gleichen Material wie die Muffe 15 hergestellt ist, erfolgt dann nicht nur eine Verschweißung zwischen dem Rohrverzweigungsstück 2 und der Muffe 15, sondern auch zwischen den Rohrenden 3, 4 und 5 und den aufgeschobenen Schlauchabschnitten 6, 7 und 8. Damit sind diese Schlauchabschnitte 6, 7 und 8 nicht nur nach außen mit der Muffe 15, sondern auch nach innen mit dem Rohrverzweigungsstück 2 verschweißt und damit fest verbunden, so daß eine Aufweitung der Schlauchabschnitte 6, 7 und 8 und damit ein Ablösen von der Rohrverzweigung 2 praktisch nicht mehr möglich ist.

Diese Aufweitung der Schlauchabschnitte 6, 7 und 8 wird auch dadurch verhindert, daß die Muffe 15 einen um mindestens eine Größenordnung höheren E-Modul als den des Gummis aufweist. Zweckmäßigerweise sollte der E-Modul der Muffe 15 in der Größenordnung von etwa 500 bis 3000 N/mm² bei Raumtemperatur liegen.

Dadurch, daß sich die Muffe 15 in ihrer Längserstreckung auch über die Bereiche der formschlüssigen Verbindung durch die Rippen 10 erstreckt und damit eine starre Bandage in diesem Bereich bildet, ist damit eine zusätzliche Sicherheit gegen ein Ablösen der Schlauchabschnitte 6, 7 und 8 gegeben.

Um dabei ein dichtes Anliegen der Schlauchenden im Bereich zwischen den Rippen 10 und den Anschlägen 12 zu gewährleisten, ist es zweckmäßig, wenn die Schlauchabschnitte 6, 7 und 8 gesondert anvulkanisierte Endstücke 20 entsprechend Fig. 3 aufweisen, deren Innenkontur der Außenkontur des Rohrvezweigungsstückes 2 im Bereich der Rippen 10 entspricht. Durch die somit in den anvulkanisierten Endstücken 20 gebildete, ebenfalls sägezahnförmige Nut 21 wird bei einem Aufschieben der Schlauchabschnitte ein unmittelbarer Formschluß mit der entsprechenden Außenkontur des Rohrverzweigungsstückes 2 hergestellt.

Mit dem beschriebenen Verfahren ist es also auf einfache Weise möglich, eine Schlauchverzweigung beliebiger Konfiguration sowie unterschiedlicher Anzahl von Schlauchabzweigen zu schaffen, die einfach herzustellen und extrem dauerhaft auch gegenüber Schwellbeanspruchungen bei höherer Temperatur ist.

## Patentansprüche

1. Verfahren zur Herstellung von Formschlauchverzweigungen aus Gummi für Kraftfahrzeug-Kühlwasserschläuche, bei dem auf die freien Enden eines Verzweigungsrohrstückes aus Kunststoff ausvulkanisierte Schlauchabschnitte aus EPDM-Gummi aufgeschoben und befestigt und die aufgeschobenen Schlauchenden und die dazwischenliegenden freien Bereiche mit einer Muffe aus einer thermoplastischen, olefinischen Masse umspritzt werden, dadurch gekennzeichnet, daß für das Verzweigungsrohrstück und die zu umspritzende Masse ein gleiches, zu einem Basispolymer des Schlauchgummis affines, thermoplastisches Material mit einem um mindestens eine Größenordnung höheren E-Modul als dem des Gummis verwendet wird derart, daß sich auch die Schmelze des Thermoplastes mit dem Polymer des Gummis verbindet und eine Verschweißung der entstehenden Muffe mit den Gummischläuchen und den freiliegenden Bereichen des Verzweigungsrohrstückes einerseits sowie des Verzweigungsrohrstückes mit den aufgeschobenen Schlauchenden andererseits erfolgt.

2. Verfahren nach Anspruch 1, dadurch gekennzeichnet, daß als polyolefinische Masse Polyethylen verwendet wird.

3. Verfahren nach Anspruch 1, dadurch gekennzeichnet, daß als polyolefinische Masse Polypropylen verwendet wird.

4. Verfahren zur Herstellung von Formschlauchverzweigungen aus Gummi für Kraftfahrzeug-Kühlwasserschläuche, bei dem auf die freien Ende eines Verzweigungsrohrstückes aus Kunststoff ausvulkanisierte Schlauchabschnitte aufgeschoben und festgelegt und die aufgeschobenen Schlauchenden und die dazwischenliegenden freien Bereiche mit einer Masse aus Kunststoff umspritzt werden, dadurch gekennzeichnet, daß für das Verzweigungsrohrstück und die zu umspritzende Muffe ein gleiches, zu einem Basispolymer des Schlauchgummis affines vernetzbares Material mit einem mindestens um eine Größenordnung höheren E-Modul als dem des Gummis verwendet wird derart, daß sich die umspritzte Masse bei der Vernetzung mit dem Polymer des Gummis verbindet und eine Verschweißung der entstehenden Muffe mit den Gummischläuchen und den freiliegenden Bereichen des Verzweigungsrohrstückes einerseits sowie des Verzweigungsrohrstückes mit den aufgeschobenen Schlauchenden andererseits erfolgt.

5. Verfahren nach Anspruch 4, dadurch gekennzeichnet, daß als vernetzbare Masse Polyethylen mit Peroxid verwendet wird.

6. Verfahren nach Anspruch 1 oder 5, dadurch gekennzeichnet, daß zwischen Rohrverzweigungsstück und aufgeschobenen Schlauchabschnitten eine formschlüssige Verbindung derart hergestellt wird, daß die freien Rohrenden des Rohrverzweigungsstückes mit einer einen Formschluß bewirkenden umlaufenden, etwa sägezahnförmigen Rippe versehen werden.

7. Verfahren nach Anspruch 6, dadurch gekennzeichnet, daß an die Schlauchabschnitte vor dem Aufschieben Schlauchendstücke von der Form der freien Enden des Verzweigungsrohrstückes anvulkanisiert werden.

8. Formschlauchverzweigung, insbesondere für Kraftfahrzeug-Kühlwasserschläuche, mit einem starren Verzweigungsrohrstück aus Kunststoff, auf dessen freie Enden die Schlauchabschnitte aufgeschoben und befestigt sind, dadurch gekennzeichnet, daß die auf das Verzweigungsrohrstück (2) aufgeschobenen Schlauchabschnitte (6,7,8) und die dazwischenliegenden freien Bereiche des Verzweigungsrohrstückes (2) von einer aufgespritzten Masse, die mindestens mit den Schlauchenden verschweißt ist und einen mindestens um eine Größenordnung höheren E-Modul als den des Schlauchgummis aufweist, umgeben und verbunden sind.

9. Formschlauchverzweigung nach Anspruch 8, dadurch gekennzeichnet, daß der E-Modul der Muffe etwa 500 bis 3000 N/mm² beträgt.

10. Formschlauchverzweigung nach Anspruch 8, dadurch gekennzeichnet, daß die freien Rohrenden (3,4,5) des Verzweigungsrohrstückes (2) auf ihrer Außenseite eine umlaufende, im Querschnitt etwa sägezahnförmige Rippe (10) mit zum Rohrende sanft abfallender Flanke (11) zur formschlüssigen Halterung der übergeschobenen Schlauchenden (6,7,8) aufweisen.

11. Formschlauchverzweigung nach Anspruch 8 oder 10, dadurch gekennzeichnet, daß das Verzweigungsrohrstück (2) im Bereich der innenliegenden Ende der Rohrstücke (3,4,5) auf ihren Außenseiten radial abragende, stiftförmige Anschläge (12) für die Schlauchabschnitte (6,7,8) aufweist.

12. Formschlauchverzweigung nach Anspruch 10, dadurch gekennzeichnet, daß die Schlauchabschnitte (6,7,8) anvulkanisierte Endstücke (20) mit einer Innenkontur (21) entsprechend den sägezahnförmigen Rippen (10) aufweisen.

## Claims

1. Process for manufacturing rubber moulded hose branchings for motor-vehicle cooling-water hoses, by which process completely vulcanised hose sections made of EPDM rubber are pushed onto and attached to the free ends of a length of branching pipe made of synthetic material and the pushed-on hose ends and the exposed zones in between are extrusion-coated with a sleeve consisting of a thermoplastic olefinic substance, characterised in that use is made, in respect of the length of branching pipe and the substance to be extrusion-coated, of the same thermoplastic material having an affinity with a base polymer of the hose rubber and having a modulus of elasticity which is higher by at least an order of magnitude than that of the rubber, in such a manner that the melt of the thermoplastic also combines with the polymer of the rubber and fusion takes place, on the one hand of the formed sleeve with the rubber hoses and the exposed zones of the length of branching pipe, and, on the other hand, of the length of branching pipe unit with the pushed-on hose ends.

2. Process according to Claim 1, characterised in that use is made of polyethylene by way of polyolefinic substance.

3. Process according to Claim 1, characterised in that use is made of polypropylene by way of polyolefinic substance.

4. Process of manufacturing rubber moulded hose branchings for motor-vehicle cooling-water hoses, by which process completely vulcanised hose sections are pushed onto and attached to the free ends of a length of branching pipe made of synthetic material and the pushed-on hose ends and the exposed zones in between are extrusion-coated with a substance consisting of synthetic material, characterised in that use is made, in respect of the length of branching pipe and the sleeve to be extrusion-coated, of the same crosslinkable material having an affinity with a base polymer of the hose rubber and having a modulus of elasticity which is higher by at least an order of magnitude than that of the rubber, in such a manner that in the course of crosslinking the extrusion-coated substance combines with the polymer of the rubber and fusion takes place, on the one hand of the formed sleeve with the rubber hoses and the exposed zones of the length of branching pipe, and, on the other hand, of the length of branching pipe with the pushed-on ends of the hose.

5. Process according to Claim 4, characterised in that by way of crosslinkable substance use is made of polyethylene with peroxide.

6. Process according to Claim 1 or 5, characterised in that a positive connection is produced between length of branching pipe and pushed-on hose sections in such a manner that the free pipe ends of the length of branching pipe are provided with a peripheral rib which is approximately sawtooth-shaped and which brings about a form closure.

7. Process according to Claim 6, characterised in that hose endpieces having the form of the free ends of the length of branching pipe are attached to the hose sections by vulcanisation prior to the pushing-on operation.

8. Moulded hose branching, in particular for motor-vehicle cooling-water hoses, with a rigid length of branching pipe made of synthetic material, onto the free ends of which the hose sections are pushed and attached, characterised in that the hose sections (6, 7, 8) pushed onto the length of branching pipe (2) and the exposed zones of the length of branching pipe (2) lying in between are surrounded and joined by an extrusion-coated substance which is at least fused with the ends of the hose and which has a modulus of elasticity which is higher by at least an order of magnitude than that of the hose rubber.

9. Moulded hose branching according to Claim 8, characterised in that the modulus of elasticity of the sleeve amounts to about 500 to 3000 N/mm2.

10. Moulded hose branching according to Claim 8, characterised in that the free pipe ends (3, 4, 5) of the length of branching pipe (2) have on their exterior a peripheral rib (10), which in cross-section is approximately sawtooth-shaped, with a flank (11) which slopes down gently towards the end of the pipe for the positive retention of the hose ends (6, 7, 8) which have been pushed on.

11. Moulded hose branching according to Claim 8 or 10, characterised in that the length of branching pipe (2) in the region of the interior ends of the pipe lengths (3, 4, 5) on their exterior sides has pin-shaped stops (12) for the hose sections (6, 7, 8), said stops projecting radially.

12. Moulded hose branching according to Claim 10, characterised in that the hose sections (6, 7, 8) have vulcanised-on endpieces (20) with an inner contour (21) corresponding to the sawtooth-shaped ribs (10).

## Revendications

1. Procédé de confection de dérivations de tuyaux souples moulées en caoutchouc, pour des tuyaux souples d'eau de refroidissement d'un véhicule automobile, qui consiste à enfiler sur les extrémités libres d'un tronçon de tuyau de dérivation des parties de conduit souple vulcanisées en matière plastique en caoutchouc EPDM, à les y fixer et à enrober par injection, les extrémités de tuyaux souples enfilés et les parties libres intermédiaires, d'un manchon en une composition oléfinique thermoplastique, caractérisé en ce qu'on utilise, pour le tronçon de conduit de dérivation et la composition à injecter, la même matière thermoplastique affine d'un polymère de base du caoutchouc du conduit souple et ayant un coefficient d'élasticité plus élevé au moins d'un ordre de grandeur que celui du caoutchouc, de manière à lier également la matière thermoplastique fondue au polymère du caoutchouc et de manière à produire un soudage du manchon qui se forme aux conduits souples en caoutchouc et aux parties dégagées du tronçon de tuyau de dérivation, d'une part, ainsi que du tronçon de tuyau de dérivation aux extrémités de conduits souples enfilées, d'autre part.

2. Procédé suivant la revendication 1, caractérisé en ce qu'il consiste à utiliser comme composition polyoléfinique du polyéthylène.

3. Procédé suivant la revendication 1, caractérisé en ce qu'il consiste à utiliser comme composition polyoléfinique du propylène.

4. Procédé de confection de dérivations de tuyaux souples moulées en caoutchouc, pour des tuyaux souples d'eau de refroidissement d'un véhicule automobile, qui consiste à enfiler sur les extrémités libres d'un tronçon de tuyau de dérivation des parties de conduits souples vulcanisées en matière plastique en caoutchouc EPDM, à les y immobiliser et à enrober par injection, les extrémités de tuyaux souples enfilées et les parties libres intermédiaires d'un manchon en une composition oléfinique thermoplastique, caractérisé en ce qu'il consiste à utiliser pour le tronçon de tuyau de dérivation et pour le manchon obtenu par injection, une même matière réticulable affine d'un polymère de base du caoutchouc du conduit souple et ayant un coefficient d'élasticité plus élevé au moins d'un ordre de grandeur que celui du caoutchouc, de manière à lier également la matière thermoplastique fondue au polymère du caoutchouc et de manière à produire un soudage du manchon qui se forme aux conduits souples en caoutchouc et aux parties dégagées du tronçon de tuyau de dérivation, d'une part, ainsi que du tronçon de tuyau de dérivation aux extrémités de conduits souples enfilées.

5. Procédé suivant la revendication 4, caractérisé en ce qu'il consiste à utiliser, comme composition réticulable, du polyéthylène avec du peroxyde.

6. Procédé suivant la revendication 1 ou 5, caractérisé en ce qu'il consiste à confectionner entre le tronçon de tuyau de dérivation et les parties de conduits souples enfilées, une liaison par complémentarité de formes, en sorte que les extrémités libres du tronçon de tuyau de dérivation soient munies d'une nervure, par exemple en forme de dents de scie, qui fait tout le tour et qui donne une liaison par complémentarité de formes.

7. Procédé suivant la revendication 6, caractérisé en ce qu'il consiste à appliquer par vulcanisation, sur les parties de tuyaux souples avant de les enfiler, des tronçons d'extrémité de conduits souples de forme des extrémités libres du tronçon de tuyau de dérivation.

8. Dérivation de conduits souples moulée, notamment pour des conduits d'eau de refroidissement de véhicule automobile, comprenant un tronçon de conduit de dérivation rigide en matière plastique sur les extrémités libres duquel sont enfilées et sont fixées des parties de conduits souples, caractérisée en ce que les parties (6, 7, 8) de conduits souples enfilées sur le tronçon de tuyau de dérivation (7) et les parties libres intermédiaires du tronçon de tuyau de dérivation (2) sont entourées d'une composition à mouler par injection et sont reliées par une composition à mouler par injection, qui est soudée au moins aux extrémités des conduits souples et qui a un coefficient d'élasticité plus élevé au moins d'un ordre de grandeur que celui du caoutchouc des conduits souples.

9. Dérivation suivant la revendication 8, caractérisée en ce que le coefficient d'élasticité du manchon est compris entre 500 et 3000 N/mm² environ.

10. Dérivation suivant la revendication 8, caractérisée en ce que les extrémités libres (3, 4, 5) du tronçon de tuyau de dérivation (2) comportent, sur leurs faces extérieures, une nervure (10) faisant tout le tour et ayant une section transversale sensiblement en forme de dents de scie ayant des flancs (11) s'abaissant doucement vers l'extrémité du tuyau pour maintenir, par complémentarité de formes, les extrémités des conduits souples (6, 7, 8) enfilées.

11. Dérivation suivant la revendication 8 ou 10, caractérisée en ce que les extrémités intérieures (3,4,5) du tronçon de tuyau de dérivation (2) comporte des butées (12) faisant saillie radialement sur leur face extérieure et en forme de tiges qui sont destinées aux parties de tuyaux souples (6, 7, 8).

12. Dérivation suivant la revendication 10, caractérisée en ce que les parties (6, 7, 8) de tuyaux souples comportent des embouts (20) vulcanisés ayant un contour intérieur (21) correspondant aux nervures (10) en forme de dents de scie.
